# EUROPÄISCHE PATENTANMELDUNG

(11) **EP 0 956 797 A1**
(43) Veröffentlichungstag der Anmeldung: **17.11.1999**
(21) Anmeldenummer: 99107143.2
(22) Anmeldetag: 13.04.1999
(51) Int. Cl.: A47J 43/08

(54) **Elektrisch betriebener Handmixer**

(30) Priorität: 09.05.1998 DE 19820915
(71) Anmelder: Braun GmbH, Frankfurt am Main (DE)
(72) Erfinder: Penaranda, Mariano, 08005 Barcelona (ES); Masip, Josep-Maria, 08190 Sant Cugat del Vallés (Barcelona) (ES); Rafols, Robert, 08100 Sant Fost de Campcentelles (Barce) (ES)

(57) **Zusammenfassung**

Die Erfindung betrifft einen elektrisch betriebenen Handmixer (18) mit einem in einem Gehäuse (8) ausgebildeten elektrischen Antriebsmotor (3), der über ein Betätigungsorgan (2) ein- bzw. ausgeschaltet werden kann und der an ein Getriebe (12) drehfest angekuppelt ist. Das Getriebe (12) weist ausgangsseitig vorzugsweise zwei zueinander parallel verlaufende und mit ihm verbundene Kupplungen (13, 14) zum Einstecken von Handmixerwerkzeugen (6, 7), wie Schneebesen (7), Knethaken (6) und dergleichen, auf. Der Handmixer (18) weist weiterhin einen sich quer zur Längsachse des oder der Handmixerwerkzeuge (6, 7) erstreckenden Handgriff (21) auf, der zum Halten des Handmixers im Betrieb dient. Nach der Erfindung ist der Antriebsmotor (3) von einem eigenen Gehäuse (27) umgeben und bildet auf diese Weise eine eigene Antriebseinheit (1), die vom Gehäuse (8) des Handmixers (18) abnehmbar ist und die auch Teil eines Stabmixers mit einer Kupplungshälfte (5) zum mechanischen Ankuppeln eines Mixerstabs oder dergleichen Werkzeugs (6) ist. Das Gehäuse (8) des Handmixers (18) weist eine Gegenkupplungshälfte (11) auf, die mit der Kupplungshälfte (5) der Antriebseinheit (1) kuppelbar ist. Hierdurch ist es möglich, mit nur einer Antriebseinheit (1), die aus einem Stabmixer stammt, in Verbindung mit einem Handmixergehäuse (8) auch einen vollwertigen Handmixer (18) zu schaffen.

## Beschreibung

Die Erfindung bezieht sich auf einen elektrisch betriebenen Handmixer gemäß dem Oberbegriff des Anspruchs 1.

Elektrisch betriebene Handmixer gehören in einem modernen Haushalt zu den wichtigsten Küchengeräten. Im Gegensatz zu den aufstellbaren größeren und schwereren Küchenmaschinen nimmt man elektrisch betriebene Handmixer, wie ihre Bezeichnung sagt, beim Arbeiten in die Hand, um so beispielsweise Speisen und Bestandteile derselben zu mixen, zu zerkleinern, zu kneten oder anderweitig zu bearbeiten. Auch zum Schneeschlagen und ähnlichen Arbeitsgängen werden sie gerne benutzt. Man kann mit ihnen unmittelbar am Kochtopf, einer Schüssel oder einem ähnlichen Küchenzubehör arbeiten.

Die Werkzeuge, wie Schneebesen, Knethaken etc., lassen sich meist durch einen Druck auf eine Taste am Handmixer leicht entfernen und dann reinigen. Genauso leicht können sie durch einfaches Einstecken mit automatischer Verrastung am Handmixer festgehalten werden. Nach erfolgtem Einstecken sind sie automatisch mit dem Antriebsmotor gekuppelt, so daß man lediglich noch den Schalter ein- und ausschalten muß. Ein derartiger elektrisch betriebener Handmixer ist bereits aus dem Prospekt der Anmelderin, Firma Braun, Kronberg, Seite 27, Ausgabe 3/98, bekannt.

Außer den erwähnten größeren aufstellbaren Küchenmaschinen und den gut in der Hand liegenden und daher für das Arbeiten bestens geeigneten, elektrisch betriebenen Handmixern gibt es auch noch sogenannte elektrisch betriebene Stabmixer. Letztere arbeiten in der Regel mit höherer Drehzahl und können ebenfalls wie die Handmixer unmittelbar am Topf verwendet werden. Man faßt sie unmittelbar am Motorgehäuse an, d.h., der Handgriff bildet gleichzeitig das Motorgehäuse, während beim Handmixer der Handgriff in der Regel an einem vom Motorgehäuse wegerstreckenden Gehäuseabschnitt ausgebildet ist. Stabmixer sind vorzugsweise zum Pürieren von Kartoffeln, Erdbeeren oder sonstigen Früchten oder auch zum Schlagen von Eiweiß zu Schnee geeignet. Zum Kneten von Teigen sind Stabmixer allerdings nicht geeignet, da sie hierfür weder konzipiert noch die hierbei auftretenden Kräfte über das im wesentlichen rohrförmige Gehäuse auf die Hand übertragen werden können. Ein derartiger Stabmixer ist ebenfalls aus dem oben angegebenen Prospekt der Anmelderin, Seite 26, bekannt.

Aus Kostengründen, manchmal auch aus Platzgründen, sind nicht in jedem Haushalt beide genannten nützlichen Küchenhelfer zu finden, obwohl beide ihre Stärke auf unterschiedlichen Arbeitsgebieten haben. Eine Hausfrau ist eigentlich erst dann komplett ausgestattet, wenn sie zumindest neben einem Handmixer auch noch einen Stabmixer ihr Eigen nennen kann.

Es ist daher Aufgabe der Erfindung, einen Handmixer gemäß dem Oberbegriff des Anspruchs 1 so weiterzubilden, daß er auch die speziellen Aufgaben eines Stabmixers nicht nur übernehmen sondern auch wie ein herkömmlicher Stabmixer benutzt werden kann. Dabei sollen mit möglichst wenig Bauteilen funktionsgerechte und leicht zu bedienende Geräte entstehen.

Zur Lösung dieser Aufgabe werden erfindungsgemäß die kennzeichnenden Merkmale des Patentanspruchs 1 vorgeschlagen. Das mit einer Antriebseinheit eines Stabmixers bestückbare bloße Gehäuse eines Handmixers löst die gestellte Aufgabe als Handmixer in hervorragender Weise. Im Handmixerbetrieb unterscheidet sich dieser Handmixer von einem herkömmlichen Handmixer überhaupt nicht, sondern er ist ebenso wie dieser einsetzbar, wobei er auch in gleicher Weise wie ein handelsüblicher Handmixer gehalten werden kann. Wenn jedoch eine spezielle, besser für einen Stabmixer geeignete Tätigkeit, wie das Pürieren, ansteht, so nimmt man einfach die Antriebseinheit vom Handmixergehäuse ab und montiert daran das für einen Stabmixer benötigte Stabmixer-Werkzeug, nämlich vorzugsweise einen Pürierstab, der aus einer in einer Glocke drehbar rotierendem Messer und einem sich daran anschließenden Schaft besteht, in dem die Welle des Messers gelagert ist. Selbstverständlich ist der elektrische Anschluß an der Antriebseinheit des Stabmixers vorgesehen und das Handmixergehäuse bedarf infolgedessen keines eigenen Netzanschlusses, was insbesondere Kosten einspart.

Durch entsprechende Formgebung, beispielsweise oval, kann sowohl an dem Gehäuse der Antriebseinheit wie an dem Handmixergehäuse dafür gesorgt werden, daß die Antriebseinheit des Stabmixers im Handmixergehäuse stets die richtige Position einnimmt und auch diese beibehält. Dabei ist erfindungsgemäß sichergestellt, daß mit dem Einsetzen der Antriebseinheit des Stabmixers im Handmixergehäuse zugleich auch die mechanische Ankupplung an das Getriebe des Handmixers erfolgt. Dieses Getriebe ist in der Regel ein Untersetzungsgetriebe, weil beispielsweise die Knethaken des Handmixers mit geringerer Drehzahl, dafür aber mit wesentlich höherem Drehmoment laufen, als ein am Stabmixer anmontierter Schneebesen oder Pürierstab.

Da auch die Antriebseinheit mit montiertem Pürierstab als vollwertiger Stabmixer zu bewerten ist, kann diese selbstverständlich auch ein eigenes Getriebe besitzen, dessen Abtriebsseite in bekannter Weise mit einem abnehmbaren Pürierstab, einem Zerkleinerer, Minichopper und dergleichen gekuppelt werden kann. Verwendet man die Antriebseinheit des Stabmixers im Handrührergehäuse, dann greift das Geriebe der Antriebseinheit in das Getriebe des Handmixergehäuses ein und bildet so einen durchzugstarken Handmixer. Der Antriebsmotor des Stabmixers sollte allerdings so kräftig ausgelegt werden, daß er den Leistungsanforderungen eines Handmixers im allgemeinen entspricht.

Wenn man an der Eingangsseite des Getriebes des Handmixers eine Gegenkupplungshälfte vorsieht, die genau in diejenige der Antriebseinheit des Stabmixers paßt, so kann man hierdurch das Handmixergehäuse problemlos an die Antriebseinheit des Stabmixers ankuppeln. Anschließend oder bereits zuvor können die Werkzeuge am Getriebeausgang des Handmixers an entsprechend den Werkzeugen angepaßten Kupplungsaufnahmen anmontiert bzw. von diesen abgenommen werden, wie dies bisher bei Handmixern üblich war. Um besondere Adapter sowohl an der Antriebseinheit des Stabmixers wie an dem Handmixergehäuse zu vermeiden, kann die Kupplungshälfte am Handmixergehäuse derart ausgebildet sein, daß die Antriebseinheit des Stabmixers ohne Zwischenglieder direkt ankuppelbar ist, d.h., aus der eingangsseitigen Kupplungshälfte des Handmixergehäuses ragt ein Wellenstumpf mit einer Verzahnung hervor, die der Verzahnung der Antriebswelle des Pürierstabes für den Stabmixer entspricht.

Bei einer besonders bevorzugten Ausführungsform der Erfindung nach den Merkmalen des Anspruchs 2 weist das Handmixergehäuse einen im wesentlichen etwa rohrförmigen Aufnahmekörper zum Einstecken der Antriebseinheit des Stabmixers auf, an dessen von der Einstecköffnung abgewandtem Ende sich das Getriebe und an dessen Abtriebsseite der oder die Kupplungen für das oder die Handmixer-Werkzeuge befinden. Die äußere Form und Länge der Antriebseinheit des Stabmixers ist genau auf die Form und Länge des Handmixergehäuses abgestimmt, so daß einerseits in der Einschiebe-Endstellung der Antriebseinheit des Stabmixers die Ankupplung an das Getriebe des Handmixergehäuses automatisch erfolgt und andererseits der Schalter des Stabmixers genau der Betätigungseinrichtung des Handmixers korrekt zugeordnet ist. Eine entsprechende Querschnittsform stellt sicher, daß die Antriebseinheit des Stabmixers nur in einer einzigen Stellung in den Aufnahmekörper eingeschoben werden kann. Darin kann sie klemmend oder auch rastend oder schnappend festgehalten werden, wobei das Festhalten und das Abnehmen selbstverständlich ohne Hilfswerkzeuge erfolgen kann.

Eine besondere Ausgestaltung des Handmixergehäuses beschreiben die Ansprüche 3, 4 und 5. Hierdurch wird die Handlichkeit sowie die Kräfteverteilung des Handmixers bei eingesetzter Antriebseinheit des Stabmixers verbessert.

Durch die Merkmale des Anspruchs 6 wird die Handlichkeit des Mixergerätes dadurch vereinfacht, indem das Betätigungsorgan am Handgriff derart angebracht wird, daß beim Halten des Handmixgerätes dieses problemlos von der gleichen Hand betätigt werden kann. Hierzu ist allerdings ein Verlängerungstück erforderlich, das das Betätigungsorgan des Handmixergehäuses mit dem Betätigungsorgan der Antriebseinheit mechanisch verbindet. Der an der Antriebseinheit ausgebildete Schalter, der bei der Verwendung der Antriebseinheit als Stabmixer direkt am Stabmixergehäuse ausgebildet ist, kann beim Handmixer-Betrieb nicht mehr direkt von Hand betätigt werden, sondern er wird über das hierfür vorgesehene und auch günstiger liegende, am Handmixergriff ausgebildete Betätigungsorgan ausgelöst. Das Betätigungsorgan des Handmixers ist in geeigneter Weise mit dem Betätigungsorgan des Schalters des Stabmixers über Übertragungsglieder mechanisch gekoppelt, so daß auch in dieser Hinsicht keine besonderen Maßnahmen beim Verbinden der Antriebseinheit des Stabmixer mit dem Handmixergehäuse getroffen werden müssen, Im Gegenteil ist es zweckmäßigerweise so, daß das Handmixergehäuse so ausgebildet ist, daß der Schalter des Stabmixers in dessen Montagestellung am Handmixergehäuse gar nicht mehr zugänglich ist, sondern gleich das Übertragungsglied des Betätigungsorgans des Handmixergehäuses an dem Betätigungsorgan der Antriebseinheit anliegt.

Gemäß den Merkmalen des Anspruchs 7 wird in Weiterbildung der Erfindung vorgeschlagen, daß sich das Betätigungsorgan des Handmixers auf der vom Gehäuse-Quersteg abgewandten Oberseite des Handgriffs, insbesondere nahe des die Antriebseinheit aufnehmenden Aufnahmekörpers, befindet, so daß sich dieser Handmixer insoweit von einer herkömmlichen Ausführungsform, wie sie bereits im Stand der Technik beschrieben wurde, nicht unterscheidet und demnach in bekannter Weise bedient werden kann.

Des weiteren kann es sehr vorteilhaft sein, wenn das Betätigungsorgan als Schieber ausgebildet ist und mindestens zwei definierte Stellungen einnehmen kann. Stabmixer sind meist mit einem sogenannten Momentschalter ausgestattet, der, so lange er von Hand betätigt wird, insbesondere so lange er gegen die Kraft einer Feder von Hand in Einschaltstellung gehalten wird, das Werkzeug rotiert. Das hängt damit zusammmen, daß das Werkzeug des Stabmixers vorzugsweise ein Pürierstab ist, das aus einem in einer Glocke rotierenden Messer besteht, welches von unten her frei zugänglich ist. Um also größere Verletzungen am rotierenden Messer zu vermeiden, schaltet bei versehentlichem Eingreifen einer Hand in die Glocke und bei sofortigem Loslassen des Bedienungsorgans der Stabmixer im gleichen Zeitpunkt selbsttätig durch die Kraft der Feder ab.

Die üblichen Werkzeuge für einen Handmixer sind nicht scharf und können daher im Dauerbetrieb betrieben werden. So erfolgt beispielsweise das Kneten eines Teigs mittels eines Knethakens. Eine Bearbeitung des Teigs ist allerdings innerhalb weniger Sekunden nicht möglich. Daher besteht hier das Betätigungsorgan vorzugsweise aus einem mehrere feste Stellungen einnehmenden Rastschalter, der das Gerät so lange eingeschaltet läßt, solange nicht das Betätigungsorgan von Hand wieder ausgeschaltet wird. Hierzu kann man das im Handmixergehäuse integrierte Betätigungsorgan, das nicht selbst Bestandteil des elektrischen Schalters ist, sondern lediglich dazu dient, über geeignete Übertragungsglieder auf das Schalterbetätigungsorgan der Antriebseinheit einzuwirken, so ausbilden, daß es in der Einschaltstellung das Betätigungsorgan und somit den elektrischen Schalter der Antriebseinheit dauernd niederdrückt. Aus dem Momentschalter der Antriebseinheit für den Stabmixer wird dann also ein normaler Ein-/Aus-Schalter, der so lange ohne Handanlegen ein- bzw. ausgeschaltet bleibt, solange er nicht wieder von Hand in seine andere Stellung gebracht wird.

Die Erfindung wird nachstehend anhand der Zeichnung näher erläutert. Die Zeichnung zeigt ein Ausführungsbeispiel der Erfindung. Hierbei stellen dar:
- Fig. 1: das Handmixergehäuse in einer explosionsartigen Darstellung bei nach oben abgenommener Antriebseinrichtung, die sonst Teil eines Stabmixers ist,
- Fig. 2: Darstellung der Antriebseinrichtung des Stabmixers am Handmixergehäuse, kurz vor deren Endmontage,
- Fig. 3: die Einheit aus Antriebseinrichtung des Stabmixers und Handmixergehäuses in der Montageendstellung, also letztendlich als Handmixer, mit daran befestigten Knethaken, wobei das Gehäuse im Bereich des Getriebes ausgebrochen dargestellt ist, und
- Fig. 4: eine vergleichbare Darstellung des Handmixers nach Fig. 3, allerdings aus einem anderen Blickwinkel und mit anderen Werkzeugen, nämlich zwei Schneebesen, wobei das Gehäuse im Bereich der Getriebeeinheit ebenfalls aufgebrochen ist.

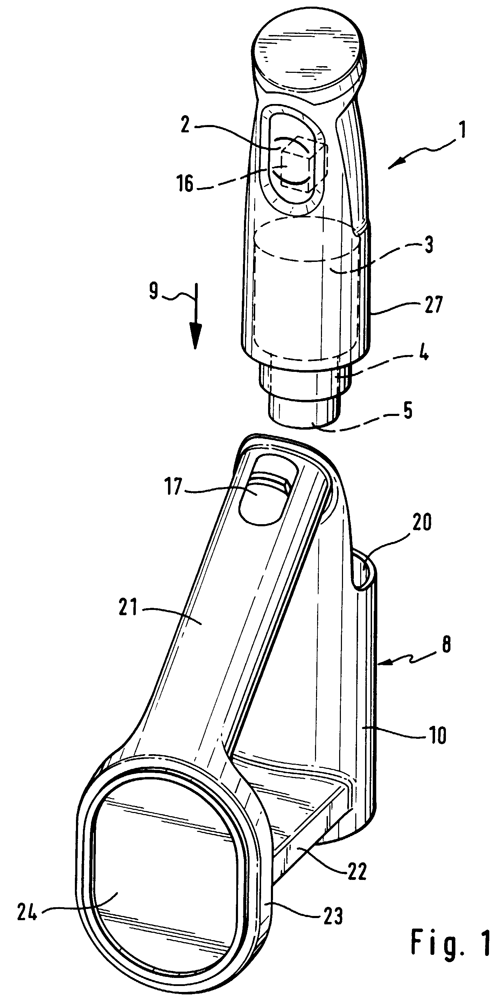

Nach den Figuren 1 bis 4 ist die Antriebseinheit 1 von herkömmlicher Bauart, und weist ein Betätigungsorgan 2 mit einem dahinter im Gehäuse 27 liegenden elektrischen Schalter (nicht dargestellt) auf, mit dessen Hilfe die Antriebseinrichtung 1 ein- und ausgeschaltet werden kann. Im Inneren des Gehäuses 27 der Antriebseinheit 1 befindet sich ein elektrischer Antriebsmotor 3 sowie eventuell ein Getriebe 4. Mittels eines nicht dargestellten elektrischen Kabels kann der Antriebsmotor 3 und somit die Antriebseinrichtung 1 mit Strom versorgt werden.

An der Getriebe- bzw. Motorabtriebsseite der Antriebseinheit 1 befindet sich eine Kupplungshälfte 5. Ein mit Hilfe dieser Antriebseinheit 1 antreibbares Werkzeug, beispielsweise ein am Ende eines Schaftes in einer Glocke ausgebildetes Zerkleinerungswerkzeug (Messer), das dann mit dem Schaft einen Pürierstab bildet (nicht dargestellt, allerdings ist ein derartiges Teil aus der Programmübersicht 1997/98, Seite 27 im linken unteren Bild, der Anmelderin bekannt), ist mit einer Gegenkupplungshälfte (nicht dargestellt) ausgestattet, die eine mechanisch kraftschlüssige Verbindung mit der Kupplungshälfte 5 der Abtriebsseite der Antriebseinheit 1 möglich macht, Insoweit ist die Konstruktion dieser Antriebseinheit 1 mit dem montierbaren Stabmixerschaft zur Bildung eines Stabmixers von bekannter Bauart, wie eingangs bereits beschrieben.

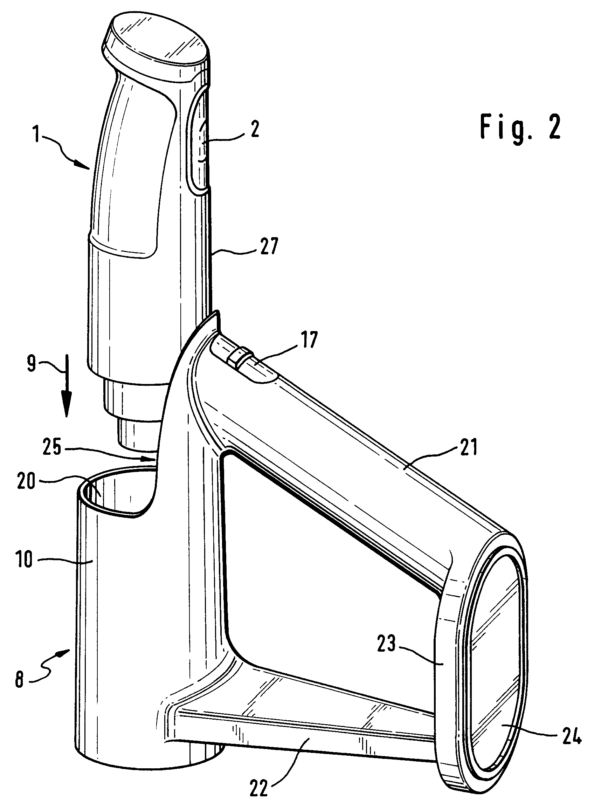

Wenn man das betreffende Werkzeug (nicht dargestellt), beispielsweise ein Pürierstab, von der Antriebseinheit 1 des Stabmixers abnimmt, so ergibt sich die Antriebseinheit 1 nach Figuren 1 und 2. Diese Antriebseinheit 1 läßt sich dann nach der Erfindung in die Einstecköffnung 20 des Handmixergehäuse 8 im Sinne des Pfeils 9 einstecken.

Das Handmixergehäuse 8 besitzt nach den Figuren 1 bis 4 einen im wesentlichen rohrförmigen Aufnahmekörper 10, in dessen Einstecköffnung 20 die Antriebseinheit 1 mit ihrer Kupplungshälfte 5 voran eingesteckt wird. Am Ende der Einsteckbewegung ist die Kupplungshälfte 5 mit einer am Handmixergehäuse 8 ausgebildeten Gegenkupplungshälfte 11 kraftschlüssig gekuppelt. Letztere befindet sich an der eingangsseitigen Antriebsseite 29 eines im Handmixergehäuse 8 integrierten Getriebes 12. Die ausgangsseitige Abtriebsseite 28 dieses Getriebes 12 ist mindestens mit zwei parallelen Kupplungen 13, 14 ausgestattet, in welche Werkzeuge des Handmixers, beispielsweise ein Schneebesen 7 oder ein oder zwei Knethaken 6, in Pfeilrichtung 15 verrastend eingeschoben werden können, wie dies ebenfalls aus der zuletzt genannten Programmübersicht aus Seite 27 bekannt ist, so daß dies an dieser Stelle der Einfachheit halber nicht mehr erwähnt werden muß.

Die Gegenkupplungshälfte 11 des Handmixergehäuses 8 entspricht in ihrer Ausbildung - zumindest was das Ankuppeln der Antriebseinheit 1 des Stabmixers betrifft - genau derjenigen, die sich auch am Einsteckende eines nicht gezeigten Werkzeugs, vorzugsweise Pürierstabes, befindet. Erst durch die Kombination von Antriebseinheit 1 und Pürierstab wird ein Stabmixer gebildet, wovon aber in den Figuren nur die Antriebseinheit 1 dargestellt ist.

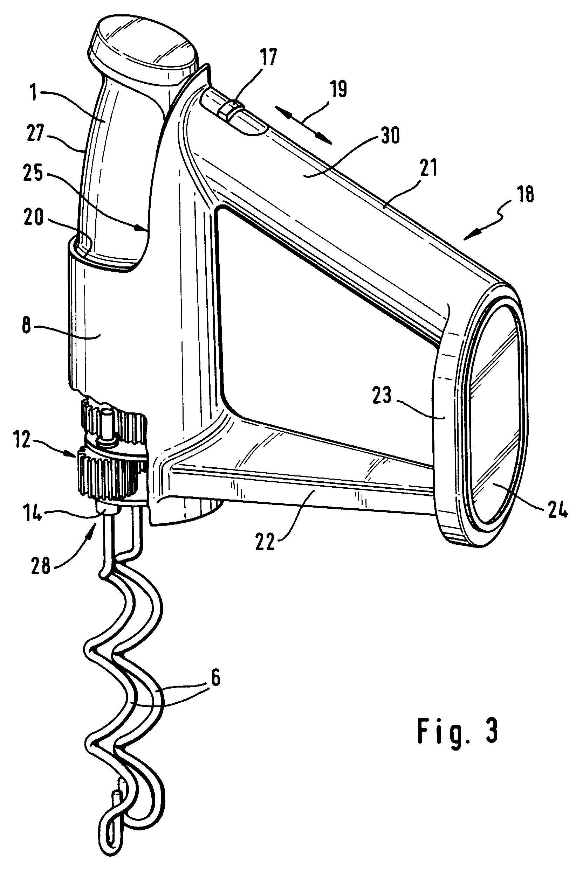

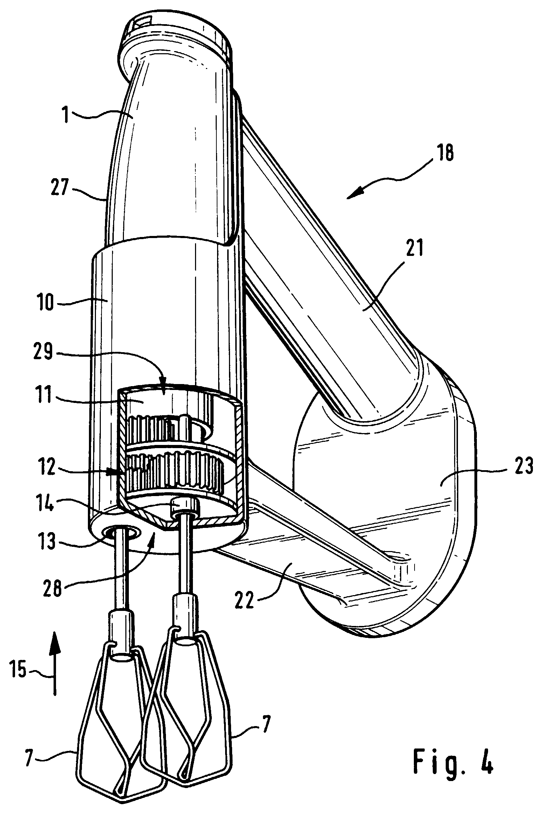

Beim Einsetzen der Antriebseinheit 1 in das Handmixergehäuse 8 wird die kraftschlüssige Verbindung vom elektrischen Antriebsmotor 3 bis zu den Kupplungen 13, 14 durch bloßes Einstecken der Antriebseinheit 1 in das Handmixergehäuse 8 erreicht (Figuren 3 und 4). Das an der Antriebseinheit 1 ausgebildete Betätigungsorgan 2 wirkt auf einen im Gehäuse 27 ausgebildeten elektrischen Schalter 16 der Antriebseinheit 1 entweder direkt oder über ein Übertragungsglied (nicht dargestellt) ein. Es kann ein sogenannter Stufenschalter mit integrierter Momentstufe sein. Letzterer verbindet den elektrischen Antriebsmotor 3 nur dann mit dem elektrischen Netz, wenn er von Hand betätigt und in dieser Stellung gehalten bleibt, was beispielsweise durch Drücken, Kippen oder sonst eine Bewegung erfolgen kann. In den Schaltstufen 1 bis 3 schaltet der Schalter rastend ein und muß nicht von Hand dauernd in der Einschaltstellung gehalten werden, während er in der Momentstufe M nach Loslassen sofort wieder in seine Nullstellung selbsttätig zurückfährt.

Fig. 3 der Zeichnung entnimmt man, daß der Schalter 16 bzw. sein Betätigungsorgan 2 in der Montageendstellung der Antriebseinheit 1 im Handmixergehäuse 8 nicht mehr zugänglich ist. Der Handmixer 18 wird nämlich in diesem Ausführungsbeispiel nicht direkt über das Betätigungsorgan 2 des Schalters 16, sondern über ein Betätigungsorgan 17 an der im Gebrauch oberen Seite des Handmixers 18 ein- und ausgeschaltet.

Es ist aber auch möglich, daß das Betätigungsorgan 17 entfällt und das Betätigungsorgan 2 der Antriebseinheit 1 gleichzeitig das Betätigungsorgan des Handmixers 18 bildet. Dabei muß dann allerdings das Gehäuse 8 des Handmixers im Bereich des Betätigungsorgans 2 eine Ausnehmung aufweisen, damit dann das Betätigungsorgan 2 der Antriebseinheit 1 direkt zugänglich ist.

Nach dem Ausführungsbeispiel nach Fig. 3 ist das Betätigungsorgan 17 allerdings nicht Bestandteil eines eigenen elektrischen Schalters, sondern es ist lediglich ein mechanisches Element, mit dessen Hilfe auf das Betätigungsorgan 2 des elektrischen Schalters 16 der Antriebseinheit 1 eingewirkt werden kann. Die Betätigung erfolgt beispielsweise im Sinne des Doppelpfeils 19 (Fig. 3). Wenn das Betätigungsorgan 17 in den beiden Endstellungen feststellbar ist, so wird aus einem Momentschalter 16 ein normaler Ein-/Aus-Schalter für den Handmixer 18.

Der rohrförmige Aufnahmekörper 10 besitzt nach den Figuren 1 und 2 an seinem in der Zeichnung oberen Ende eine Einstecköffnung 20, über welche die Antriebseinheit 1 in Pfeilrichtung 9 eingesteckt wird. Vom oberen Ende des Aufnahmekörpers 10 erstreckt sich in Querrichtung ein Handgriff 21 und etwa parallel dazu ein zusätzlicher Gehäusequersteg 22. Die sich vom rohrförmigen Aufnahmekörper 10 quer wegerstreckenden Arme 21, 22 sind über ein dazu wiederum etwa quer verlaufendes Verbindungsstück 23 miteinander verbunden. Der Handgriff 21, der Quersteg 22, der rohrförmige Aufnahmekörper 10 und das Verbindungsstück 23 sind vorzugsweise einstückig aus Kunststoff gefertigt. Außenseitig ist das Verbindungsstück 23 flach ausgebildet, so daß eine Aufstellfläche 24 für den Handmixer 18 oder das Handmixergehäuse 8 entsteht.

Lediglich der Ordnung halber sei noch angemerkt, daß sich das Betätigungsorgan 17 des Handmixergehäuses 8 auf der Oberseite 30 des Handgriffs 21, vorzugsweise nahe dem rohrförmigen Aufnahmekörper 10, befindet. Der rohrförmige Aufnahmekörper 10 weist nach den Figuren 1 bis 4 an seiner oberen Vorderseite eine Ausnehmung 25 auf, die sich in Längsrichtung von dem in der Zeichnung oberen Ende bis in den mittleren Bereich des rohrförmigen Aufnahmekörpers 10 erstreckt. Sie bringt nicht nur eine Gewichtsreduzierung, sondern sie erleichtert auch das Montieren, insbesondere Abmontieren, der Antriebseinheit 1 vom Handmixergehäuse 8, da der Zugriff auf die Antriebseinheit 1 von Hand erleichtert wird.

## Patentansprüche

1. Elektrisch betriebener Handmixer (18) mit einem in einem Gehäuse (8) ausgebildeten elektrischen Antriebsmotor (3), der über ein Betätigungsorgan (2) ein- bzw. ausgeschaltet werden kann und der an ein Getriebe (12) drehfest angekuppelt ist, das ausgangsseitig vorzugsweise zwei zueinander parallel verlaufende und mit dem Getriebe (12) verbundene Kupplungen (13, 14) zum Einstecken von Handmixerwerkzeugen (6, 7), wie Schneebesen (7), Knethaken (6) und dergleichen, aufweist, und mit einem sich quer zur Längsachse des oder der Handmixerwerkzeuge (6, 7) erstreckenden Handgriff (21), der zum Halten des Handmixers im Betrieb dient
**dadurch gekennzeichnet,**
daß der Antriebsmotor (3) von einem eigenen Gehäuse (27) umgeben ist und auf diese Weise eine eigene Antriebseinheit (1) bildet, daß die Antriebseinheit (1) vom Gehäuse (8) des Handmixers (18) abnehmbar ist, daß die Antriebseinheit (1) Teil eines Stabmixers mit einer Kupplungshälfte (5) zum mechanischen Ankuppeln eines Mixerstabs oder dergleichen Werkzeugs (6) ist und daß das Gehäuse (8) des Handmixers (18) eine Gegenkupplungshälfte (11) aufweist, die mit der Kupplungshälfte (5) der Antriebseinheit (1) kuppelbar ist.

2. Handmixer nach Anspruch 1,
**dadurch gekennzeichnet**,
daß das Handmixergehäuse (8) einen im wesentlichen etwa rohrförmigen Aufnahmekörper (10) zum Einstecken der Antriebseinheit (1) aufweist, daß sich an dem von der Einstecköffnung (20) abgewandten Ende des Handmixergehäuses (8) ein Getriebe (12) mit der einen Kupplungshälfte (5) und an dessen Abtriebsseite (28) sich die Kupplungen (13, 14) zum Ankuppeln des oder der Handmixerwerkzeuge (6, 7) befinden.

3. Handmixer nach Anspruch 1 und 2,
**dadurch gekennzeichnet**,
daß sich vom Bereich der Einstecköffnung (20) des Handmixergehäuses (8) der quer abstehende Handgriff (21) und vom Bereich der den Handmixerwerkzeugen (6, 7) zugeordneten beiden Kupplungen (13, 14) ein zusätzlicher Gehäusequersteg (22) wegerstreckt, wobei die Enden des Gehäusequerstegs (22) und des Handgriffs (21) über ein insbesondere einstückig angeformtes Verbindungsstück (23) miteinander verbunden sind.

4. Handmixer nach Anspruch 3,
**dadurch gekennzeichnet**,
daß das Verbindungsstück (23) als Platte ausgebildet ist oder zumindest eine ebene als Aufstellfläche für den Handmixer (18) dienende Außenfläche (24) aufweist.

5. Handmixer nach Anspruch 3 oder 4,
**dadurch gekennzeichnet,**
daß eine Ausnehmung (25) an der zum Verbindungsstück (23) abgewandten Vorderseite des Handmixergehäuses (8) ausgebildet ist, die vom Handgriff (21) bis in einen mittleren Bereich des Aufnahmekörpers (10) reicht.

6. Handmixer nach wenigstens einem der Ansprüche 3 bis 5,
**dadurch gekennzeichnet**,
daß das Betätigungsorgan (2) des Stabmixers von einem im Handmixergehäuse (18) ausgebildeten Betätigungsorgan (17) steuerbar ist.

7. Handmixer nach Anspruch 6,
**dadurch gekennzeichnet**,
daß sich das Betätigungsorgan (17) des Handmixers (18) auf der vom Gehäusequersteg (22) abgewandten Oberseite des Handgriffs (21), insbesondere nahe des Aufnahmekörpers (10), befindet.

8. Handmixer nach Anspruch 6 oder 7,
**dadurch gekennzeichnet**,
daß das Betätigungsorgan (17) als Schieber ausgebildet ist und mindestens zwei definierte Stellungen aufweist.
